# EUROPEAN PATENT SPECIFICATION

(11) **EP 4 304 797 B1**
(45) Date of publication and mention of the grant of the patent: **02.04.2025**
(21) Application number: 22706415.1
(22) Date of filing: 21.02.2022
(51) Int. Cl.: B23D 15/14, B23D 35/00, B23D 31/00, B23D 15/00

(54) **MACHINE FOR SHEARING SCRAP**
MASCHINE ZUM SCHEREN VON SCHROTT
MACHINE POUR CISAILLER DES DÉCHETS

(30) Priority: 09.03.2021 IT 202100005408
(43) Date of publication of application: 17.01.2024
(73) Proprietor: Acha S.r.L., 40137 Bologna (IT)
(72) Inventor: BONFIGLIOLI, Giancarlo, 40050 CASTELLO D'ARGILE (BO) (IT)
(74) Representative: Corradini, Corrado
(86) International application number: PCT/IB2022/051505
(87) International publication number: WO 2022/189876

(56) References cited:
- DE-B1- 1 777 219
- DE-U1- 9 401 617
- US-A- 3 587 985

## Description

### TECHNICAL FIELD

The present invention relates to a machine for processing scraps, such as car body wrecks or parts thereof or other similar products. In particular, the invention relates to a machine for processing scraps configured to reduce the size of scraps and make them movable by means of shovels, buckets and similar tools.

### PRIOR ART

They are known machines for processing scraps, such as automobiles, parts thereof, industrial machinery or big appliances, which generally provide cutting into portions entire scraps or previously compacted scraps to reduce their size and make them easier to be moved.

US 3,587,985 for example discloses a machine for processing scraps in accordance with the preamble of claim 1.

A known embodiment of such machines comprises a container body, generally provided with a tubular portion which defines a volume for accommodating entering scraps, in which a shear adapted to cut the compacted scraps is housed.

The shear comprises a first cutting element, or movable cutting element as it is fixed to a movable body that is slidably driven along a sliding axis, generally by a linear oleodynamic actuator, between a first end-of-stroke position and a second end-of-stroke position. The shear also comprises a second cutting element, or fixed cutting element as it is fixed to the container body, such as the tubular body, which cooperates with the first cutting element (which cyclically moves closer to and away from the second cutting element) in order to cut scraps being introduced into the container body.

A conveyor may be present, such as a belt conveyor, or a pusher element which moves the scraps towards the shear to feed it. In alternative, if there is no conveyor, the user must use an external machine, such as an earth-moving machine equipped with a shovel, to feed the shear.

An object of the present invention is to make available a scrap processing machine, of the shear type, having a greater productivity and efficiency than the machines of the prior art.

Such objects are achieved by the characteristics of the invention which are reported in the independent claim. The dependent claims outline preferred and/or particularly advantageous aspects of the invention.

### DISCLOSURE OF THE INVENTION

The invention makes available a machine for processing scraps comprising:
- a first tubular body provided with a first opening for introducing scraps and an opposite second opening,
- a second tubular body and which is provided with a first opening for introducing scraps independent from the first opening of the first tubular body and an opposite second opening independent from the second opening of the first tubular body and juxtaposed thereto along a juxtaposition direction,
- a first shear for cutting scraps coming from the first tubular body and provided with:
   ∘ a movable body which is slidably driven along a sliding axis parallel to the juxtaposition direction between a first end-of-stroke position and a second end-of-stroke position
   ∘ a first cutting element fixed to the movable body,
   ∘ a second cutting element positioned at a portion of the second opening of the first tubular body distal from the second opening of the second tubular body
- a second shear for cutting scraps coming from the second tubular body and provided with:
   ∘ a first cutting element fixed to an end of said movable body opposite to an end of the movable body which the first cutting element of the first shear is fixed to and which faces the opposite direction relative to the first cutting element of the first shear,
   ∘ a second cutting element positioned at a portion of the second opening of the second tubular body distal from the second opening of the first tubular body

wherein the second cutting element of the first shear and the second cutting element of the second shear are aligned along a direction parallel to the sliding axis and face to each other,
and wherein when the movable body moves from the first end-of-stroke position to the second end-of-stroke position, the first cutting element of the first shear moves away from the second cutting element of the first shear and at the same time the first cutting element of the second shear moves closer to the second cutting element of the second shear, and when the movable body moves from the second end-of-stroke position to the first end-of-stroke position, the first cutting element of the first shear moves closer to the second cutting element of the first shear and at the same time the first cutting element of the second shear moves away from the second cutting element of the second shear.

Thanks to this solution the shear is active, that is it cuts scraps both in the stroke from the first end-of-stroke position to the second end-of-stroke position and in the stroke from the second end-of-stroke position to the first end-of-stroke position, thus increasing the machine hourly production with dimensions being equal.

According to an aspect of the invention, the machine can comprise a linear actuator provided with a cylinder inside which a piston is slidably accommodated along a sliding axis parallel to the sliding axis which is integral with a stem which protrudes outwardly with respect to a pair of covers adapted to close respective axial ends of the cylinder, and wherein the stem is fixed to a frame of the machine and the movable body is fixed to the cylinder.

The machine is thereby more compact than using, as in the prior art, a hydraulic cylinder whose stem is hinged to the movable body, as in such case, the linear actuator should be longer in order to cover the same maximum length. Furthermore the devices of the prior art require a linear guide coupled to the linear actuator, while the machine according to the invention is already sufficiently guided by the linear actuator in said configuration.

According to another aspect of the invention the linear actuator is connected to a side end of the movable body parallel to the sliding axis.

According to still another aspect of the invention, the movable body may comprise a through hole within which the cylinder of the linear actuator is precisely accommodated.

According to a further aspect of the invention, each tubular body may define a respective volume for accommodating scraps, each of which extends along a mainly vertical direction, and wherein the sliding axis of the movable body is horizontal.

Machinery such as conveyor belts to take scraps to the shears are thereby not required. The invention may further provide that the second openings lie on a horizontal plane, and wherein the movable body is entirely at a height lower than the second openings.

The invention may also provide that the movable body may comprise a pair of pushing surfaces to push the scraps cut by the first shear and the second shear, which pushing surfaces are transversal to the sliding axis.

### BRIEF DESCRIPTION OF THE DRAWINGS

Further features and advantages of the invention will be more apparent after reading the following description provided by way of non-limiting example, with the aid of the accompanying drawings.

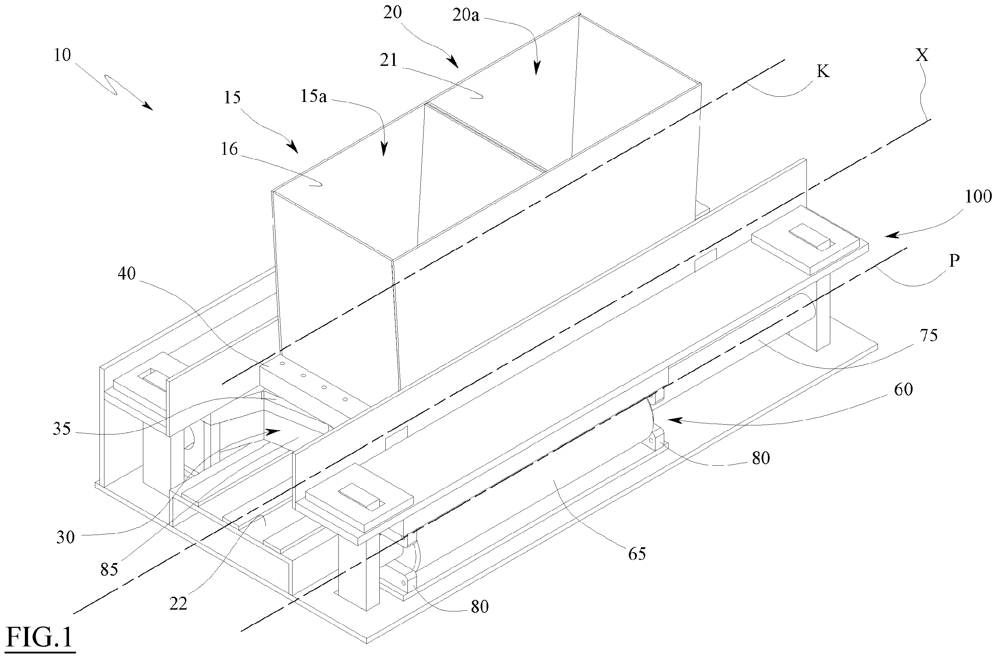

Figure 1 is an axonometric view of a machine for processing scraps according to the invention.

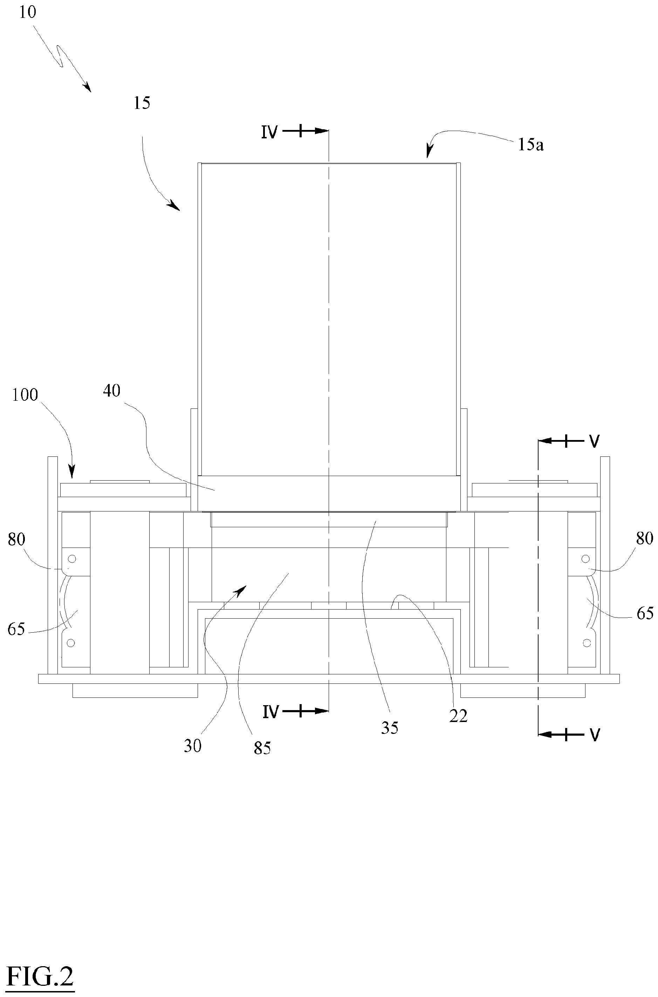

Figure 2 is a side view of the machine of figure 1.

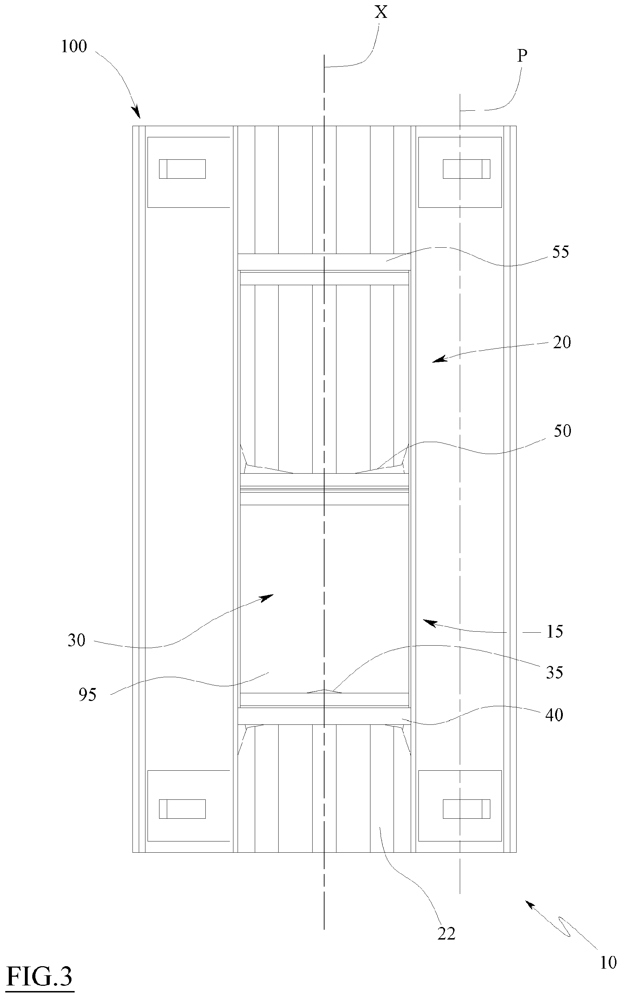

Figure 3 is a plan view of the machine of the previous figures.

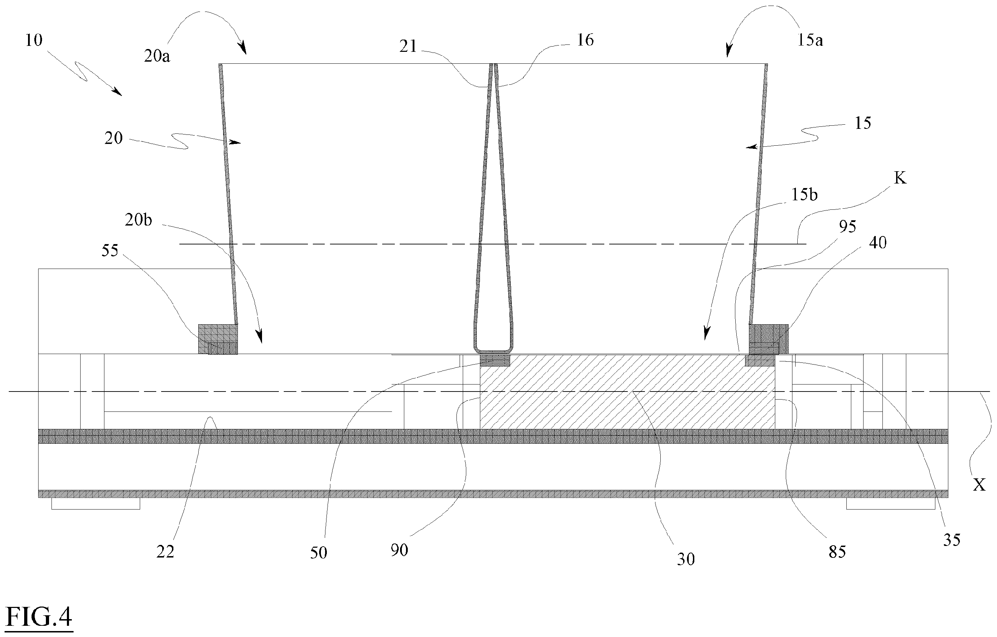

Figure 4 is a sectional view of the machine according to the plane of section IV-IV.

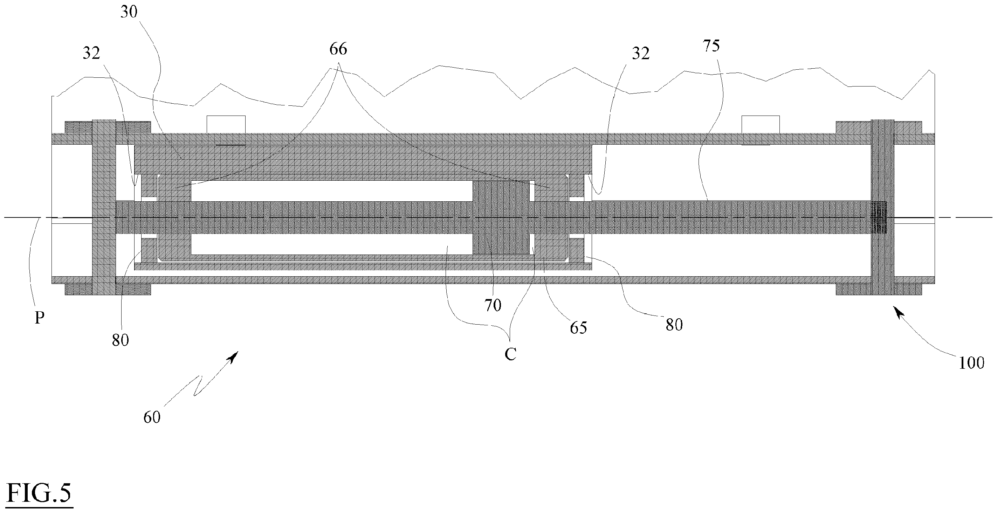

Figure 5 is a sectional view of the machine according to the plane of section V-V.

### BEST MODE FOR IMPLEMENTING THE INVENTION

Referring in particular to such figures, 10 globally indicates a machine for processing scraps R, in particular for cutting scraps into smaller portions.

The machine 10 comprises a container body adapted to contain and drive scraps R before and after the cutting step.

The container body comprises a first tubular body 15 for guiding scraps R which is provided with a (single) pair of openings, a first opening of which 15a for introducing scraps and an opposite opening 15b. In detail, the first tubular body 15 comprises an inner tubular surface 16, for instance having a substantially quadrangular cross section, which extends from the first opening 15a to the second opening 15b without interruption. Preferably the inner tubular surface 16 gradually narrows (monotonously) from the first opening to the second opening, substantially forming a guiding funnel towards the second opening for the scraps R. It must not be excluded however that in embodiments not shown, the inner tubular surface 16 may have a constant area cross section and/or also a cross section different from the quadrangular one, such as circular or octagonal.

The container body also comprises a second tubular body 20 for guiding scraps R which is provided with a (single) pair of openings, a first opening of which 20a for introducing scraps and an opposite opening 20b. In detail, the second tubular body comprises an inner tubular surface 21, for instance having a substantially quadrangular cross section, which extends from the first opening 20a to the second opening 20b without interruption. Preferably the inner tubular surface 21 gradually narrows (monotonously) from the first opening to the second opening, substantially forming a guiding funnel towards the second opening for moving scraps.

The second tubular body 20 is independent from the first tubular body 15, where independent means that scraps R cannot pass from one to the other. In particular, the first opening 15a is distinct and independent from the first opening 20a and the second opening 15b is distinct and independent from the second opening 20b.

Furthermore, the second opening 15b and the second opening 20b are juxtaposed between each other along a juxtaposition direction K, preferably they also lie on a same lying plane.

In the embodiment shown, also the first tubular body 15 and the second tubular body 20 are juxtaposed along said juxtaposition direction K, and are for instance also parallel between them. In particular, the tubular bodies 15,20 have longitudinal axes (or central in case of stocky tubular bodies) perpendicular to the juxtaposition direction K, and are parallel between each other. It must also be specified that the longitudinal (or central) axis of each tubular body, intersects both the first opening 15a,20a and the second opening 15b,20b of the tubular body itself.

Still in the embodiment shown, the first opening 15a and the second opening 20b are juxtaposed along the juxtaposition direction K and substantially lie on a same plane.

The inner tubular surface 16 and the inner tubular surface 21 are separated in practice by walls which define the inner tubular surfaces, which walls are for instance in contact between each other at the first openings.

It must not be excluded that in an alternative embodiment the tubular bodies may be arranged with longitudinal (central) axes that are not parallel between them, for instance they may be tilted relative to a common plane on which the juxtaposition direction X lies, and also the first openings may not be juxtaposed between them provided that the second openings are juxtaposed between each other.

The machine 10, i.e. the container body, also comprises an abutment and sliding surface 22, outside the tubular bodies and on which the second opening 15b and the second opening 20b face. For example such abutment and sliding surface 22 is substantially parallel to the lying plane of the second openings. In other words, it is transversal (perpendicular) to the longitudinal axes of the tubular bodies.

In addition, the abutment and sliding surface 22 extends longitudinally along a direction parallel to the juxtaposition direction K.

The abutment and sliding surface 22 preferably has a corrugated cross section, i.e. comprising a plurality of flat hollows alternating to flat ridges.

In the embodiment shown, the first tubular body 15 and the second tubular body 20 extend vertically, i.e. the second openings 15b,20b lie on a substantially horizontal plane, and the abutment and sliding surface 22 extends along a horizontal direction. Actuators for pushing scraps from the respective first opening to the respective second opening are thereby not required. It is not however excluded that in an alternative embodiment the first tubular body 15 and the second tubular body 20 may be arranged horizontally, i.e. the second openings 15b,20b lie on a substantially vertical plane, as well as the abutment and sliding surface 22 on which they face.

The machine 10 comprises a first shear for cutting scraps R coming from the first tubular body 15, in particular for cutting scraps R protruding from the first tubular body 15 through the second opening 15b. In optimal conditions such scraps protruding from the second opening contact (lie in contact in the case of the shown vertical embodiment of the tubular bodies) the abutment and sliding surface 22.

The first shear comprises a (rigid) movable body 30 slidably driven along a sliding axis X parallel to the juxtaposition direction K (similarly it is also possible to define the juxtaposition direction K based on the sliding axis, in particular it is possible to say that the second opening 15b and the second opening 20b are aligned along a direction parallel to the sliding axis X. In addition, all the definitions given so far based on the juxtaposition direction K may be translated based on the sliding axis X).

In the embodiment shown, the sliding axis is transversal, for instance perpendicular to the (central) longitudinal axes of the tubular bodies. Preferably the sliding axis X is substantially horizontal.

In addition, the movable body 30 slides into a gap comprised between the abutment and sliding surface 22 and the second openings 15b,20b (i.e. the lying plane of said second openings), and for instance slides in contact with the abutment and sliding surface 22. In the embodiment shown, the movable body 30 is partially overlapped in plan to the abutment and sliding surface 22.

The movable body 30 is slidably driven along the sliding axis X between a first end-of-stroke position and a second end-of stroke position, as will be better defined hereinafter. During such movement between the first and the second end-of-stroke position, the movable body 30 is always overlapped to the abutment and sliding surface 22.

The first shear comprises a first cutting element 35 fixed to the movable body 30, for instance without residual degrees of freedom, preferably fixed by means of threaded connection members to the movable body or welded thereon.

The first shear comprises also a second cutting element 40, which cooperates with the first cutting element 35 for cutting scraps R coming from the first tubular body 15, which is positioned at a portion of the second opening 15b of the first tubular body 15 distal from the second opening 20b of the second tubular body 20. In particular distal therefrom along the juxtaposition direction K.

In detail, the second cutting element 40 is rigidly fixed without residual degrees of freedom, for instance by means of threaded connection members or by welding, to a portion of the first tubular body 15 at the second opening 15b and distal from the second opening 20b of the second tubular body 20.

The first cutting element 35 and the second cutting element 40 are aligned along the juxtaposition direction K, i.e. along the sliding axis X.

The first cutting element 35 and the second cutting element 40 comprise a respective cutting edge and such cutting edges face to each other.

Said (rectilinear) cutting edges are transversal to the sliding axis X.

The first cutting element 35, i.e. its cutting edge, faces the first end-of-stroke position and the second cutting edge 40, i.e. its cutting edge, faces the second end-of-stroke position.

The machine 10 comprises a second shear for cutting scraps coming from the first tubular body 20, in particular for cutting scraps R protruding from the first tubular body 20 through the second opening 20b. In optimal conditions such scraps protruding from the second opening 20b of the second tubular body 20 contact (lie in contact in the case of the shown vertical embodiment of the tubular bodies) the abutment and sliding surface 22.

The second shear comprises a first cutting element 50 fixed to the movable body 30, of the first shear, for instance without residual degrees of freedom, preferably fixed by means of threaded connection members to the movable body 30 or welded thereon.

The first cutting element 50 of the second shear is placed in particular at an end of said movable body 30, diametrically opposite along the sliding axis X, at an end (always intersecting the sliding axis) of the movable body 30 which the first cutting element 35 of the first shear is fixed to. The first cutting element 50 faces the opposite direction relative to the first cutting element of the first shear.

In detail, the first cutting element 50 of the second shear comprises a cutting edge which faces a direction opposite to the cutting edge of the first cutting element 35 of the first shear.

It is also possible to say that the first cutting element 35 of the first shear faces the first end-of-stroke position and the cutting edge of the first cutting element 50 of the second shear faces the second end-of-stroke position.

The second shear also comprises a second cutting element 55, which cooperates with the first cutting element 50 for cutting scraps R coming from the second tubular body 20, which is positioned at a portion of the second opening 20b of the second tubular body 20 distal from the second opening 15b of the first tubular body 15. In particular distal therefrom along the juxtaposition direction K.

In detail, the second cutting element 55 is rigidly fixed without residual degrees of freedom, for instance by means of threaded connection members or by welding, to a portion of the second tubular body 20 at the second opening 20b and distal from the second opening 15b of the first tubular body 15.

The first cutting element 35 and the second cutting element y are further aligned along the sliding axis X, i.e. along a direction parallel to the sliding axis.

The first cutting element 50 and the second cutting element 55 are aligned along the juxtaposition direction K, i.e. along the sliding axis X.

The first cutting element 50 and the second cutting element 55 comprise a respective cutting edge and such cutting edges face to each other.

Said (rectilinear) cutting edges are transversal to the sliding axis X.

The first cutting element 50, i.e. its cutting edge, faces the second end-of-stroke position and the second cutting edge 55, i.e. its cutting edge, faces the first end-of-stroke position.

The second cutting element 40 of the first shear and the second cutting element 55 of the second shear are aligned along a direction parallel to the sliding direction X, furthermore, said cutting elements, i.e. the respective cutting edges, face to each other.

When the movable body 30 moves from the first end-of-stroke position to the second end-of-stroke position, the first cutting element 35 of the first shear moves away from the second cutting element 40 of the first shear and at the same time (of an equal amount/distance covered) the first cutting element 50 of the second shear moves closer to the second cutting element 55 of the second shear (at least succeeding in touching it and/or being aligned thereto along a direction perpendicular to the sliding axis X).

During such step the scraps R protruding from the second opening 20b towards the abutment and sliding surface 22 are cut.

When the movable body 30 moves from the second end-of-stroke position to the first end-of-stroke position, the first cutting element 35 of the first shear moves closer to the second cutting element 40 of the first shear and at the same time (of an equal amount) the first cutting element 50 of the second shear moves away from the second cutting element 55 of the second shear (at least succeeding in touching it and/or being aligned thereto along a direction perpendicular to the sliding axis X).

During such step the scraps R protruding from the second opening 15b towards the abutment and sliding surface 22 are cut.

The first end-of stroke position may be defined as a position wherein the first cutting element 35 of the first shear is at a distance from the second cutting element 55 of the second shear at least equal to, preferably greater than, the distance of the second cutting element 40 of the first shear from the second cutting element 55 of the second shear. Furthermore, in such position the distance of the first cutting element 50 of the second shear from the second cutting element 40 of the first shear is minimum.

The second end-of stroke position may be defined as the position wherein the first cutting element 50 of the second shear is at a distance from the second cutting element 40 of the first shear at least equal to, preferably greater than, the distance of the second cutting element 55 of the second shear from the second cutting element 40 of the first shear. Furthermore, in such position the distance of the first cutting element 35 of the first shear from the second cutting element 55 of the second shear is minimum.

The movable body 30 comprises a pair of pushing surfaces 85,90 for pushing scraps T cut by the first shear and second shear, in particular for pushing them along the abutment and sliding surface 22.

Said pushing surfaces 85,90 are transversal (perpendicular) to the sliding axis X.

In detail, the movable body 30 comprises a first abutment surface 85 substantially aligned to the first cutting element 35 relative to a transversal (perpendicular) sliding direction and a second abutment surface 90 substantially aligned to the first cutting element 50 relative to a transversal (perpendicular) sliding direction.

The movable body 30 may also comprise a face 95 (an upper face in the embodiment shown) facing the direction opposite to the abutment and sliding surface 22, which has a dimension in a direction parallel to the sliding axis X and in a direction perpendicular to the sliding axis X such to close (at least partially, i.e. such that scraps R cannot reach the abutment and sliding surface) the second opening 15b when the movable body 30 is in the first end-of-stroke position and to obstruct the second opening 20b when the movable body 30 is in the second end-of-stroke position.

The machine 10 comprises a linear actuator 60, preferably two linear actuators, to drive the movable body 30 along the sliding axis X, i.e. along the sliding axis X between the first end-of-stroke position and the second end-of-stroke position.

Each linear actuator 60 is provided with a cylinder 65 within which a piston 70 is slidably accommodated along a sliding axis P parallel and eccentric to the sliding axis X to divide the cylinder 65 in two chambers C fluidically connected to a supply and control system (not shown) which selectively enters pressurized fluid into one of the two chambers C to drive the linear actuator 60. Each actuator also comprises a stem 75 which is rigidly slidably integral with the piston 70 and which protrudes outwardly relative to a pair of covers 80 adapted to close respective axial ends of the cylinder 65.

The stem 75 is rigidly fixed (without residual degrees of freedom) to a frame 100 of the machine 10 (in particular to which the first tubular body 15 and the second tubular body 20 are fixed, and for example the abutment and sliding surface 22).

The movable body 30 is rigidly slidably fixed to the cylinder 65. In practice the sliding axis P is thus defined by the sliding of the cylinder 65 relative to the piston 70 as, since by such configuration pressurized fluid enters into the chambers C defined by the piston 70, it is not the piston 70 which moves, being fixed by means of the stem 75 to the frame 100, but the cylinder 65 and, with it, the movable body 30.

The linear actuator 60 is connected to a side end of the movable body 30 parallel to the sliding axis X (and transversal thereto).

In particular, the linear actuator 60 is placed at a side of the movable body according to a direction perpendicular to the sliding axis X (and also for instance transversal, preferably perpendicular, to the longitudinal axes of the tubular bodies).

For example, the pair of linear actuators 60 is connected to opposite side ends of the movable body 30 parallel to the sliding axis X (i.e. transversal to an axis perpendicular to the sliding axis).

The pair of linear actuators 60 is therefore placed at opposite sides of the movable body 30 according to a direction perpendicular to the sliding axis X (and also for instance, transversal, preferably perpendicular, to the longitudinal axes of the tubular bodies).

In the embodiment shown, where the tubular bodies 15,20 extend along a vertical direction and the sliding axis X is horizontal, the two linear actuators 60 are juxtaposed in plan to the movable body 30 along a transversal direction (perpendicular) to the sliding axis X.

Further, the linear actuator 60, i.e. linear actuators 60, may be accessible from outside the frame 100 by an opening formed therein.

In the embodiment shown, the movable body 30 comprises a through hole 32 within which the cylinder 65 of the linear actuator 60 is precisely accommodated. In particular, the cylinder 65 is blocked in position inside such through hole 32 by a pair of cylinder heads 66 rigidly fixed to the movable body 30 (such as by threaded connection members or by welding) which block it at opposite longitudinal ends of the cylinder 65 itself.

The operation of the machine 10 according to the invention is as follows.

When scraps R are present both in the first tubular body 15 and in the second tubular body 20 the machine 10 is activated, i.e. the movable body 30 is slidably driven along the axis X between the first end-of-stroke position and the second end-of-stroke position and, moving from both of them, it cuts scraps, either those in the first tubular body 15 or those in the second tubular body 20.

In particular, when the movable body 30 is in the first end-of-stroke position, it obstructs the second opening 15b of the first tubular body 15, preventing scraps R from protruding from the first tubular body 15 through its second opening 15b. In addition, in such position, the movable body 30 obstructs only the second opening 15b of the first tubular body 15, while the second opening 20b of the second tubular body 20 is cleared and scraps R present therein protrude outwardly from said second opening 20b, for instance contacting and laying on the abutment and sliding surface 22.

By means of the linear actuator 60, i.e. the pair of the linear actuators 60, the movable body 30 is moved from the first end-of-stroke position to the second end-of-stroke position such that by means of the first cutting element 50 and second cutting element 55 of the second shear it is possible to cut scraps protruding from the second opening 20b.

Thanks to the pushing surface 90 scraps are moved away from the second opening 20b while being cut (and possibly even after based on the distance of the end-of-stroke position from the first tubular body), for instance making them slide on the abutment and sliding surface 22.

Once the second end-of-stroke position has been reached, the movable body 30 obstructs the passage of scraps R through the second opening 20b of the second tubular body 20, while it clears the second opening 15b of the first tubular body 15, such that scraps can protrude outwardly from it, for instance contacting and laying on the abutment and sliding surface 22.

By feeding the linear actuator 60, i.e. the pair of linear actuators 60, to move the movable body 30 from the second end-of-stroke position to the first end-of-stroke position, the first cutting element 35 and the second cutting element 40 of the first shear cut scraps which protrude from the second opening 15b of the first tubular body 15.

Also in this case, thanks to the pushing surface 85 at the first cutting element 35 of the first shear it is possible to move scarps R away from the second opening 15b, for instance making them slide on the abutment and sliding surface 22.

Once the first end-of-stroke position has been reached, the second opening 15b is again obstructed while the second opening 20b is cleared and the scrap cutting cycle starts anew. In practice, at each stroke (from the first end-of-stroke position to the second one and from the second to the first) of the movable body 30, hence of the linear actuator 60 driving it, is possible to cut scraps R, whereas in the prior art devices, one of the two strokes is just used to take the movable body 30 to an initial position from which it starts cutting scraps.

## Claims

1. Machine (10) for processing scraps (R) comprising:
- a first tubular body (15) provided with a first opening (15a) for introducing scraps and an opposite second opening (15b),
- a second tubular body (20) and which is provided with a first opening (20a) for introducing scraps independent from the first opening (15a) of the first tubular body (15) and an opposite second opening (20b) independent from the second opening (15b) of the first tubular body and juxtaposed thereto along a juxtaposition direction (K),
**characterised in that** the machine (19) further comprises:
- a first shear for cutting scraps coming from the first tubular body (15) and provided with:
∘ a movable body (30) which is slidably driven along a sliding axis (X) parallel to the juxtaposition direction (K) between a first end-of-stroke position and a second end-of-stroke position,
∘ a first cutting element (35) fixed to the movable body (30), and
∘ a second cutting element (40) positioned at a portion of the second opening (15b) of the first tubular body (15) distal from the second opening (20b) of the second tubular body (20),
- a second shear for cutting scraps coming from the second tubular body (20) and provided with:
∘ a first cutting element (50) fixed to an end of said movable body (30) opposite to an end of the movable body (30) which the first cutting element (35) of the first shear is fixed to and which faces the opposite direction relative to the first cutting element (35) of the first shear,
∘ a second cutting element (55) positioned at a portion of the second opening (20b) of the second tubular body (20) distal from the second opening (15b) of the first tubular body (15),
wherein the second cutting element (40) of the first shear and the second cutting element (55) of the second shear are aligned along a direction parallel to the sliding axis (X) and face to each other,
and wherein when the movable body (30) moves from the first end-of-stroke position to the second end-of-stroke position, the fist cutting element (35) of the first shear moves away from the second cutting element (40) of the first shear and at the same time the first cutting element (50) of the second shear moves closer to the second cutting element (55) of the second shear, and when the movable body (30) moves from the second end-of-stroke position to the first end-of-stroke position, the first cutting element (35) of the first shear moves closer to the second cutting element (40) of the first shear and at the same time the first cutting element (50) of the second shear moves away from the second cutting element (55) of the second shear.

2. Machine (10) for processing scraps according to claim 1, comprising a linear actuator (60) provided with a cylinder (65) inside which a piston (70) is slidably accommodated along a sliding axis (P) parallel to the sliding axis (X) which is integral with a stem (75) which protrudes outwardly with respect to a pair of covers (80) adapted to close respective axial ends of the cylinder (65), and wherein the stem (75) is fixed to a frame (100) of the machine (10) and the movable body (30) is fixed to the cylinder (65).

3. Machine (10) for processing scraps (R) according to claim 2, wherein the linear actuator (60) is connected to a side end of the movable body (30) parallel to the sliding axis (X).

4. Machine (10) for processing scraps (R) according to claim 2 or 3, wherein the movable body (30) comprises a through hole (32) within which the cylinder (65) of the linear actuator (60) is precisely accommodated.

5. Machine (10) for processing scraps (R) according to claim 1, wherein each tubular body (15,20) defines a respective volume for accommodating scraps (R), each of which extends along a main vertical direction, and wherein the sliding axis (X) is horizontal.

6. Machine (10) for processing scraps (R) according to claim 1, wherein the second openings (15b, 20b) lie on a horizontal plane, and wherein the movable body (30) is entirely at a height lower than the second openings (15b,20b).

7. Machine (10) for processing scraps (R) according to claim 1, wherein the movable body (30) comprises a pair of pushing surfaces (85,90) for pushing scraps (R) cut by the first shear and the second shear, which pushing surfaces are transversal to the sliding axis (X).

## Patentansprüche

1. Maschine (10) zum Verarbeiten von Schrott (R), umfassend:
- einen ersten rohrförmigen Körper (15), der mit einer ersten Öffnung (15a) zum Einführen von Schrott und einer gegenüberliegenden zweiten Öffnung (15b) versehen ist,
- einen zweiten rohrförmigen Körper (20), der mit einer ersten Öffnung (20a) zum Einführen von Schrott, die von der ersten Öffnung (15a) des ersten rohrförmigen Körpers (15) unabhängig ist, und einer gegenüberliegenden zweiten Öffnung (20b), die von der zweiten Öffnung (15b) des ersten rohrförmigen Körpers unabhängig ist und daneben entlang einer Nebeneinanderstellungsrichtung (K) liegt, versehen ist,
**dadurch gekennzeichnet, dass** die Maschine (19) ferner Folgendes umfasst:
- eine erste Schere zum Schneiden von Schrott, der von dem ersten rohrförmigen Körper (15) kommt, und die mit Folgendem versehen ist:
∘ einem bewegbaren Körper (30), der entlang einer Gleitachse (X) parallel zu der Nebeneinanderstellungsrichtung (K) zwischen einer ersten Endlagenposition und einer zweiten Endlagenposition gleitend angetrieben wird,
∘ einem ersten Schneidelement (35), das an dem bewegbaren Körper (30) befestigt ist, und
∘ einem zweiten Schneidelement (40), das an einem Abschnitt der zweiten Öffnung (15b) des ersten rohrförmigen Körpers (15) distal von der zweiten Öffnung (20b) des zweiten rohrförmigen Körpers (20) positioniert ist,
- eine zweite Schere zum Schneiden von Schrott, der von dem zweiten rohrförmigen Körper (20) kommt, und die mit Folgendem versehen ist:
∘ einem ersten Schneidelement (50), das an einem Ende des bewegbaren Körpers (30) gegenüber einem Ende des bewegbaren Körpers (30), an dem das erste Schneidelement (35) der ersten Schere befestigt ist, und das in die entgegengesetzte Richtung in Bezug auf das erste Schneidelement (35) der ersten Schere weist, befestigt ist,
∘ einem zweiten Schneidelement (55), das an einem Abschnitt der zweiten Öffnung (20b) des zweiten rohrförmigen Körpers (20) distal von der zweiten Öffnung (15b) des ersten rohrförmigen Körpers (15) positioniert ist,
wobei das zweite Schneidelement (40) der ersten Schere und das zweite Schneidelement (55) der zweiten Schere entlang einer Richtung parallel zu der Gleitachse (X) ausgerichtet sind und einander zugewandt sind,
und wobei, wenn sich der bewegbare Körper (30) von der ersten Endlagenposition zu der zweiten Endlagenposition bewegt, sich das erste Schneidelement (35) der ersten Schere von dem zweiten Schneidelement (40) der ersten Schere wegbewegt und sich gleichzeitig das erste Schneidelement (50) der zweiten Schere näher zu dem zweiten Schneidelement (55) der zweiten Schere bewegt, und wenn sich der bewegbare Körper (30) von der zweiten Endlagenposition in die erste Endlagenposition bewegt, sich das erste Schneidelement (35) der ersten Schere näher an das zweite Schneidelement (40) der ersten Schere bewegt und sich gleichzeitig das erste Schneidelement (50) der zweiten Schere weg von dem zweiten Schneidelement (55) der zweiten Schere bewegt.

2. Maschine (10) zum Verarbeiten von Schrott nach Anspruch 1, umfassend einen linearen Aktuator (60), der mit einem Zylinder (65) versehen ist, in dem ein Kolben (70) entlang einer Gleitachse (P) parallel zu der Gleitachse (X) verschiebbar untergebracht ist, der mit einem Schaft (75) einstückig ist, der in Bezug auf ein Paar von Abdeckungen (80), die zum Verschließen jeweiliger axialer Enden des Zylinders (65) angepasst sind, nach außen hervorsteht, und wobei der Schaft (75) an einem Rahmen (100) der Maschine (10) befestigt ist und der bewegbare Körper (30) an dem Zylinder (65) befestigt ist.

3. Maschine (10) zum Verarbeiten von Schrott (R) nach Anspruch 2, wobei der lineare Aktuator (60) mit einem Seitenende des bewegbaren Körpers (30) parallel zu der Gleitachse (X) verbunden ist.

4. Maschine (10) zum Verarbeiten von Schrott (R) nach Anspruch 2 oder 3, wobei der bewegbare Körper (30) ein Durchgangsloch (32) umfasst, in dem der Zylinder (65) des linearen Aktuators (60) präzise untergebracht ist.

5. Maschine (10) zum Verarbeiten von Schrott (R) nach Anspruch 1, wobei jeder rohrförmige Körper (15, 20) ein jeweiliges Volumen zum Aufnehmen von Schrott (R) definiert, wovon sich jedes entlang einer vertikalen Hauptrichtung erstreckt, und wobei die Gleitachse (X) horizontal ist.

6. Maschine (10) zum Verarbeiten von Schrott (R) nach Anspruch 1, wobei die zweiten Öffnungen (15b, 20b) auf einer horizontalen Ebene liegen, und wobei der bewegbare Körper (30) vollständig auf einer niedrigeren Höhe als die zweiten Öffnungen (15b, 20b) liegt.

7. Maschine (10) zum Verarbeiten von Schrott (R) nach Anspruch 1, wobei der bewegbare Körper (30) ein Paar Schiebeflächen (85, 90) zum Schieben der Abfälle (R) umfasst, die von der ersten Schere und der zweiten Schere geschnitten werden, wobei die Schiebeflächen quer zu der Gleitachse (X) sind.

## Revendications

1. Machine (10) destinée au traitement de déchets (R) comprenant :
- un premier corps tubulaire (15) doté d'une première ouverture (15a) permettant d'introduire les déchets et une deuxième ouverture opposée (15b),
- un deuxième corps tubulaire (20) doté d'une première ouverture (20a) permettant d'introduire des déchets indépendamment de la première ouverture (15a) du premier corps tubulaire (15), et d'une deuxième ouverture opposée (20b), indépendamment de la deuxième ouverture (15b) du premier corps tubulaire et juxtaposée à celle-ci selon une direction de juxtaposition (K),
**caractérisé en ce que** la machine (19) comprend en outre :
- une première cisaille permettant de couper les déchets provenant du premier corps tubulaire (15) et pourvue de :
∘ un corps mobile (30) entraîné de manière coulissante le long d'un axe de coulissement (X) parallèle à la direction de juxtaposition (K) entre une première position de fin de course et une deuxième position de fin de course,
∘ un premier élément de coupe (35) fixé à l'élément mobile (30), et
∘ un deuxième élément de coupe (40) disposé sur une partie de la deuxième ouverture (15b) du premier corps tubulaire (15) distale de la deuxième ouverture (20b) du deuxième corps tubulaire (20),
- une deuxième cisaille permettant de couper les déchets provenant du deuxième corps tubulaire (20) et pourvue de :
∘ un premier élément de coupe (50) fixé à une extrémité dudit corps mobile (30) opposé à une extrémité du corps mobile (30) à laquelle est fixé le premier élément de coupe (35) de la première cisaille et qui fait face à la direction opposée par rapport au premier élément de coupe (35) de la première cisaille,
∘ un deuxième élément de coupe (55) disposé sur une partie de la deuxième ouverture (20b) du deuxième corps tubulaire (20) distale de la deuxième ouverture (15b) du premier corps tubulaire (15),
dans lequel le deuxième élément de coupe (40) de la première cisaille et le deuxième élément de coupe (55) de la deuxième cisaille sont alignés le long d'une direction parallèle à l'axe de coulissement (X) et se font face,
et dans lequel, lorsque le corps mobile (30) passe de la première position de fin de course à la deuxième position de fin de course, le premier élément de coupe (35) de la première cisaille s'éloigne du deuxième élément de coupe (40) de la première cisaille et, en même temps, le premier élément de coupe (50) de la deuxième cisaille se rapproche du deuxième élément de coupe (55) de la deuxième cisaille, et lorsque le corps mobile (30) passe de la deuxième position de fin de course à la première position de fin de course, le premier élément de coupe (35) de la première cisaille se rapproche du deuxième élément de coupe (40) de la première cisaille et, en même temps, le premier élément de coupe (50) de la deuxième cisaille s'éloigne du deuxième élément de coupe (55) de la deuxième cisaille.

2. Machine (10) destinée au traitement des déchets selon la revendication 1, comprenant un actionneur linéaire (60) équipé d'un cylindre (65) à l'intérieur duquel un piston (70) est logé de manière coulissante le long d'un axe de coulissement (P) parallèle à l'axe de coulissement (X) solidaire d'une tige (75) faisant saillie vers l'extérieur par rapport à une paire de couvercles (80) adaptés pour fermer les extrémités axiales respectives du cylindre (65), et dans lequel la tige (75) est fixée à un châssis (100) de la machine (10) et le corps mobile (30) est fixé au cylindre (65).

3. Machine (10) destinée au traitement des déchets (R) selon la revendication 2, dans laquelle l'actionneur linéaire (60) est relié à une extrémité latérale du corps mobile (30) parallèle à l'axe de coulissement (X).

4. Machine (10) destinée au traitement des déchets (R) selon la revendication 2 ou 3, dans laquelle le corps mobile (30) comprend un trou débouchant (32) à l'intérieur duquel le cylindre (65) de l'actionneur linéaire (60) est logé avec précision.

5. Machine (10) destinée au traitement des déchets (R) selon la revendication 1, dans laquelle chaque corps tubulaire (15, 20) définit un volume respectif permettant de loger les déchets (R), chacun d'eux s'étendant le long d'une direction verticale principale, et dans laquelle l'axe de coulissement (X) est horizontal.

6. Machine (10) destinée au traitement des déchets (R) selon la revendication 1, dans laquelle les deuxièmes ouvertures (15b, 20b) se trouvent sur un plan horizontal, et dans laquelle le corps mobile (30) se trouve entièrement à une hauteur inférieure aux deuxièmes ouvertures (15b, 20b).

7. Machine (10) destinée au traitement des déchets (R) selon la revendication 1, dans laquelle le corps mobile (30) comprend une paire de surfaces de poussée (85,90) permettant de pousser les déchets (R) coupés par la première cisaille et la deuxième cisaille, ces surfaces de poussée étant transversales par rapport à l'axe de coulissement (X).
